# EUROPÄISCHE PATENTSCHRIFT

(11) **EP 3 897 931 B1**
(45) Veröffentlichungstag und Bekanntmachung des Hinweises auf die Patenterteilung: **17.04.2024**
(21) Anmeldenummer: 19827717.0
(22) Anmeldetag: 19.12.2019
(51) Int. Cl.: B01D 67/00, B01D 69/02, B01D 69/14, B01D 61/02, C02F 1/44

(54) **VERFAHREN ZUR ABTRENNUNG VON SPURENSTOFFEN**
METHOD FOR SEPARATING TRACE SUBSTANCES
PROCÉDÉ DE SÉPARATION DE MICROPOLLUANTS

(30) Priorität: 19.12.2018 EP 18214266
(43) Veröffentlichungstag der Anmeldung: 27.10.2021
(73) Patentinhaber: MCI Internationale Hochschule GmbH, 6020 Innsbruck (AT)
(72) Erfinder: KOCH, Marc, 6622 Berwang (AT); SPRUCK, Martin, 6114 Kolsass (AT); RUPPRICH, Marco, 6094 Axams (AT); BACK, Jan, 6020 Innsbruck (AT); RAUTER, Marcus, 6020 Innsbruck (AT)
(74) Vertreter: Schwarz & Partner Patentanwälte GmbH
(86) Internationale Anmeldenummer: PCT/EP2019/086320
(87) Internationale Veröffentlichungsnummer: WO 2020/127742

(56) Entgegenhaltungen:
- BU-RASHID ET AL: "Pilot Tests of Multibore UF Membrane at Addur SWRO Desalination Plant, Bahrain", DESALINATION, ELSEVIER, AMSTERDAM, NL, Bd. 203, Nr. 1-3, 24. Januar 2007 (2007-01-24), Seiten 229-242, XP005856954, ISSN: 0011-9164, DOI: 10.1016/J.DESAL.2006.04.010
- HE JINSONG ET AL: "Treatment of methylene blue containing wastewater by a cost-effective micro-scale biochar/polysulfone mixed matrix hollow fiber membrane: Performance and mechanism studies", JOURNAL OF COLLOID AND INTERFACE SCIENCE, Bd. 512, 2017, Seiten 190-197, XP085284815, ISSN: 0021-9797, DOI: 10.1016/J.JCIS.2017.09.106
- HE JINSONG ET AL: "Development of a novel biochar/PSF mixed matrix membrane and study of key parameters in treatment of copper and lead contaminated water", CHEMOSPHERE, PERGAMON PRESS, OXFORD, GB, Bd. 186, 9. Juli 2017 (2017-07-09), Seiten 1033-1045, XP085165188, ISSN: 0045-6535, DOI: 10.1016/J.CHEMOSPHERE.2017.07.028
- GARCIA-IVARS JORGE ET AL: "Rejection of trace pharmaceutically active compounds present in municipal wastewaters using ceramic fine ultrafiltration membranes: Effect of feed solution pH and fouling phenomena", SEPARATION AND PURIFICATION TECHNOLOGY, Bd. 175, 2016, Seiten 58-71, XP029853789, ISSN: 1383-5866, DOI: 10.1016/J.SEPPUR.2016.11.027

## Beschreibung

Die vorliegende Erfindung betrifft eine mehrstufige Filtrationsanlage für verunreinigtes Wasser, sowie ein Verfahren zur Reinigung von verunreinigtem Wasser.

### Hintergrund der Erfindung

Abwasserreinigungsanlagen gemäß Stand der Technik sind auf die Entfernung von Nährstoffen, abbaubaren organischen Verbindungen und Feststoffen ausgelegt. Eine Vielzahl organischer Spurenstoffe, die potentiell schädlich sind, werden nicht oder unvollständig abgebaut oder nicht vollständig adsorptiv entfernt. Diese Spurenstoffe gelangen in die Umwelt, wo sie ihre Wirkung auf Gewässerorganismen oder über den Kreislauf der Wassernutzung beim Menschen entfalten können.

Der Einsatz von Membrantechnologien zur Entfernung organischer Spurenstoffe aus dem Wasser wird bereits seit längerem untersucht. Membranen können ohne großen Aufwand in Abwasserabflussanlagen integriert werden und weisen Abtrennungseigenschaften auf, die von ihrer "Porengröße" (Cut-off) abhängen. Für die Entfernung von organischen Spurenstoffen sind sehr kleine Porenweiten (Nanofiltration oder Umkehrosmose) notwendig, wie sie auch in der Trinkwasseraufbereitung zum Einsatz kommen, wogegen Mikrofiltrationsmembranen oder Ultrafiltrationsmembranen keinen weitergehenden Rückhalt aufweisen.

Der große Druckverlust beim Einsatz von Membranen mit geringerem Cut-Off in der Abwassertechnik stellt hierbei eine große Herausforderung dar und verhindert bis dato eine breitere Anwendung.

Aus WO 2005/011839 A1 ist ein keramisches Filterelement bekannt, welches von einem Aktivkohlefilterelement umhüllt ist. In US 2017/0240449 A1 wird ein Filterelement beschrieben, welches Abschnitte mit keramischem Aufbau und Abschnitte mit Aktivkohle aufweist. Die in diesen Dokumenten beschriebenen Filterelemente zeigen gute Abtrennungseigenschaften von organischen Spurenstoffen in Abwässern, sie sind allerdings kostenintensiv und anfällig für mechanische Beschädigungen.

US 2016/0158707 A1 zeigt eine Mehrkanalmembran, die allerdings keinen Rückhalt für organische Spurenstoffe bietet.

In EP 0 647 465 A1 wird eine Filtrationsmembran ausgeführt, welche einerseits ein Polymer und andererseits Polyvinylpyrrolidon als aktives Adsorbens enthält. Flache, runde, und kapillare Membranen werden demnach eingesetzt, um Bier oder andere Lösungen zu filtrieren.

In US 5,127,925 wird ein Verfahren beschrieben, mit welchem Membranen mit organischen Trägermaterialien und partikulären Adsorptionsmitteln für die Trennung bzw. Anreicherung von Gasen verwendet werden.

US 6,787,216 beschreibt die Herstellung von Mehrkanalmembranen, welche zur Membranfiltration eingesetzt werden. Eine Extrusion einer Polymerlösung durch eine Düse und eine nachfolgende Ausfällung durch inneres und äußeres Koagulationsmedium wird angeführt. Jedoch wird kein Adsorbens beigesetzt.

In WO 2015/000801 A1 werden Mehrkanalmembranen als Trägermembran und deren Beschichtung mit einer Polyamid-Schicht als aktive Trennschicht beschrieben. Die Membranen sind als Filtrationselement zu verstehen. Die Trägermembran und die Trennschicht können Partikel im Nanometer-Maßstab - unter anderem Kohlenstoffpartikel - enthalten. Ein Verfahren mittels des Filtrationselements zur Entfernung von Spurenstoffen mit Adsorption durch eingebettete Aktivkohle oder Vergaserkohle ist nicht beschrieben.

In Kiyono, Koops, Wessling, Strathmann, Journal of Membrane Science 231 (2004) 109-115 werden Einkanal Mixed-Matrix Hohlfasermembranen basierend auf Polysulfon und Ionentauscherharzen für den Einsatz in der Diffisions-Dialyse beschrieben.

In Wang, Chung; Journal of Membrane Science 421-422 (2012), 361-374 wird gezeigt, wie Mehrkanalmembranen in der Membrandestillation verwendet werden können.

In Bu-Rashid et al.; Desalination 203 (2007), 229-242 wird gezeigt, wie Mehrkanalmembranen zur Vorreinigung in der Wasserentsalzung mittels Umkehrosmose verwendet werden können.

In Aaron et al.; Separation and Purification 75 (2010) 229-242 werden mixed matrix Membranen, also polymere Trägermaterialien mit eingebetteten anorganischen Adsorptionsmitteln, in ihrer Effizienz bezüglich Gastrennung und Gaspermeation verglichen.

In Tijink et al. Acta Biomaterialia 8 (2012) 2279-2287 und Biomaterials 34 (2013) 7819-7828 werden mixed-matrix Membranen beschrieben, welche Aktivkohle als Adsorbens enthalten.

In 2017 Lu, Yeow; Materials and Design 120 (2017) 326-335 werden Composite Flachmembranen aus Polyethersulfon und Zeoliten zur Adsorption von Indoxylsulfaten beschrieben. Eine Adsorbenseinbettung in Form von Aktiv- oder Vergaserkohle zur Spurenstoffabtrennung wie beispielsweise Diclofenac wird nicht angeführt.

### Kurzbeschreibung der Erfindung

Aufgabe der vorliegenden Erfindung ist die Bereitstellung eines Verfahrens sowie einer Filtrationsanlage zur Abtrennung von Spurenstoffen aus mit diesen Spurenstoffen sowie anderen Verunreinigungen verunreinigtem Wasser. Das Verfahren und die Filtrationsanlage sollen eine gute und selektive Abtrennung von anthropogenen, organischen Spurenstoffen ermöglichen und möglichst einfach und kostengünstig sein.

Gelöst wird diese Aufgabe durch ein Verfahren zur Abtrennung von Spurenstoffen aus verunreinigtem Wasser, wobei mit Spurenstoffen verunreinigtes Wasser zuerst grob gereinigt wird und anschließend mit einer Filtermembran filtriert wird, wobei die Filtermembran eine Mehrkanalmembran mit einer Polymermatrix, Poren und
- 3 bis 70 Gew. % Adsorbens, vorzugsweise 40 bis 60 Gew. % Adsorbens,
- 0 bis 5 Gew. % Zusatzstoffe,
- 0 bis 5 Gew. % Porenbildner,
- Rest Polymer,
aufweist, wobei das Adsorbens und gegebenenfalls die Zusatzstoffe und gegebenenfalls der Porenbildner in die Polymermatrix eingebettet sind, wobei die Filtermembran über einen Zulauf für das grob filtrierte Wasser aufweist und das Abwasser dann die Filtermembran permeiert, wobei die im grob filtrierten Wasser enthaltenen Spurenstoffe am Adsorbens zumindest teilweise adsorbiert werden.

Die Aufgabe wird weiters gelöst durch eine Filtrationsanlage für verunreinigtes Wasser, umfassend einen Vorreinigungszulauf für verunreinigtes Wasser, eine mit dem Vorreinigungszulauf fluidleitend verbundene Vorreinigungsanlage mit einem Vorreinigungsauslass und eine mit dem Vorreinigungsauslass fluidleitend verbundene Filtermembran, wobei die Filtermembran eine Mehrkanalmembran mit einer Polymermatrix, Poren und
- 3 bis 70 Gew. % Adsorbens, vorzugsweise 40 bis 60 Gew. % Adsorbens,
- 0 bis 5 Gew. % Zusatzstoffe,
- 0 bis 5 Gew. % Porenbildner,
- Rest Polymer,
aufweist, wobei das Adsorbens und gegebenenfalls die Zusatzstoffe und gegebenenfalls der Porenbildner in die Polymermatrix eingebettet sind.

Diese Filtermembran umfasst eine Mehrkanalmembran mit mindestens zwei geometrisch parallel angeordnete Kanälen innerhalb eines Zentralkörpers gemäß der Beschreibung aus US 6,787,216 B1.

Die Spurenstoffe sind vorzugsweise aus der Gruppe umfassend organische Spurenstoffe wie Sulfamethoxazol, Carbamazepin, Diuron, Bisphenol A, Benzafibrat, Diclofenac, Ibuprofen, Metoprolol, Benzotriazol und Iohexol ausgewählt.

Erfindungsmäß können Spurenstoffe aus der Gruppe umfassend Blei, Cadmium, Arsen, Antimon, Eisen, Quecksilber, Nitrat, Nitrit, Sulfat, Ammonium, Phosphat ausgewählt sein.

Die Abtrennung der Spurenstoffe erfolgt dabei durch ein Verfahren, bei dem der Zulauf durch die poröse Membranmatrix permeiert und dabei in Kontakt mit dem Adsorbens gerät, wobei die Spurenstoffe eine hohe Affinität zum eingesetzten Adsorbens aufweisen und daran adsorbieren. Somit ist das Verfahren grundsätzlich verschieden zu bereits beschriebenen Membranfiltrationsverfahren zur Spurenstoffabtrennung, da die Abtrennung nicht auf einem Filtrationseffekt durch Größenausschluss bzw. Lösung und Diffusion in der Membranmatrix basiert, sondern auf Adsorption auf dem eingebetteten Adsorbens.

Der Zulauf ist charakterisiert als wässrige Lösung, welche ungereinigtes oder teilweise gereinigtes Abwasser, aufzureinigendes Trinkwasser, oder aufzureinigendes Prozesswasser enthält, und somit Spurenstoffe gemäß zuvor beschriebener Ausführung beinhaltet.

Gleichzeitig enthalten beschriebene wässrige Zulauflösungen Schweb- und Trübstoffe, welche die selektive Spurenstoff-Adsorption beeinträchtigen können.

Das beschriebene Verfahren eignet sich daher insbesondere zur Aufreinigung solcher Lösungen, da die poröse Membranmatrix solche Schweb- und Trübstoffe durch Filtrationseffekt mit Größenausschluss wirksam abtrennen kann. Somit wird eine geringere Belastung für das Adsorbens gewährleistet.

Bevorzugt ist vorgesehen, dass das verunreinigte Wasser Abwasser, aufzureinigendes Trinkwasser oder aufzureinigendes Prozesswasser ist.

Bevorzugt ist das verunreinigte Wasser Abwasser.

Bevorzugt ist vorgesehen, dass die grobe Reinigung mechanisch und/oder biologisch erfolgt. Im Falle einer mechanischen groben Reinigung kann diese durch Rechen, Sieben, Koagulieren und/oder Sedimentieren erfolgen.

Im Falle einer biologischen groben Reinigung kann diese durch Belebtschlammung, Vor- und Nachklärung und einen Membranbioreaktor erfolgen.

Bevorzugt ist eine biologische und eine mechanische grobe Reinigung vorgesehen. In diesem Fall ist das Filtrationsverfahren der dritte Reinigungsschritt.

Es hat sich als vorteilhaft erwiesen, wenn das Adsorptionsmittel ausgewählt ist aus der Gruppe Aktivkohle, Vergaserkohle oder Mischungen daraus. Dies ermöglicht eine gute Adsorption von Spurenstoffen mit geringem Molekulargewicht mit hoher Absorptionsleistung.

Bevorzugt weist das Adsorptionsmittel eine Partikelgröße von 0,1 bis 100 µm auf. Auch mit dieser Maßnahme kann die Absorptionsleistung erhöht werden.

Um die Absorption der Spurenstoffe zu optimieren, ist die Durchlässigkeit der Filtermembran ein Parameter mit großem Einfluss. Zu hohe Durchlässigkeiten führen zu ungenügender Reinigung, zu geringe Durchlässigkeiten zu einer zu geringen Reinigungsgeschwindigkeit. Daher ist vorteilhafterweise vorgesehen, dass die Filtermembran eine Permeabilität bezogen auf reines Wasser von 1 bis 1000 L/m²h bar vorzugsweise 20 bis 1000 L/m² h bar hat.

Weiter ist bevorzugt vorgesehen, dass die Filtermembran eine Ausschlussgrenze (Molecular-weight-cut-off) von 10 000 Da bis 1 000 000 Da aufweist.

Es hat sich für die Langlebigkeit der Filtermembran als vorteilhaft herausgestellt, wenn das Polymer ausgewählt ist aus der Gruppe umfassend Polyethersulfon (PES), Polysulfon (PS), Polypropylen (PP), Polyvinylidenfluorid (PVDF), vorzugsweise PES. PVDF ist im Gegensatz den anderen Polymeren chemisch stabiler, allerdings hat sich PES als chemisch und thermisch ausreichend stabil und weniger anfällig für Membranfouling verglichen mit anderen Polymeren erwiesen. Das Polymer ist daher bevorzugt PES.

Der Porenbildner ist bevorzugt Polyvinylpyrrolidon (PVP).

Bevorzugt ist vorgesehen, dass die Vorreinigungsanlage eine mechanische Vorreinigungsstufe und/oder eine biologische Vorreinigungsstufe.

Im Falle einer mechanischen Vorreinigungsstufe ist diese bevorzugt ausgewählt aus der Gruppe Rechen, Sieb, Koagulation- und Sedimentationsanlage.

Im Falle einer biologischen Vorreinigungsstufe ist diese bevorzugt ausgewählt aus der Gruppe Belebtschlammungbecken, Vor- und Nachklärunganlage und Membranbioreaktor.

Bevorzugt ist eine biologische und eine mechanische Vorreinigungsstufe vorgesehen. In diesem Fall ist die Filtrationsanlage die dritte Reinigungsstufe. Daher betrifft die Erfindung in einer bevorzugten Ausführung auch eine Abwasserreinigungsanlage, umfassend eine Filtrationsanlage der vorgenannten Art, bevorzugt mit Vorreinigungsanlage mit einer mechanischen Vorreinigungsstufe und einer biologischen Vorreinigungsstufe.

In einem Aspekt ist die Aufgabe der vorliegenden Erfindung die Bereitstellung eines Verfahrens, einer Filtrationsanlage und einer Abwasserreinigungsanlage beinhaltend eine Filtermembran, welche eine gute und selektive Abtrennung von anthropogenen, organischen Spurenstoffen ermöglicht und auf einen möglichst einfachen und kostengünstigen Einsatz abgestimmt ist.

Die Filtermembran umfasst eine Polymermatrix, und ist dadurch gekennzeichnet, dass die Polymermatrix Poren und
- 3 bis 70 Gew. % Adsorbens, vorzugsweise 40 bis 60 Gew. % Adsorbens,
- 0 bis 5 Gew. % Zusatzstoffe,
- 0 bis 5 Gew.% Porenbildner,
- Rest Polymer,
aufweist, wobei das Adsorbens und gegebenenfalls die Zusatzstoffe und gegebenenfalls der Porenbildner in die Polymermatrix eingebettet sind.

Es konnte von den Erfindern gezeigt werden, dass eine Polymermatrix, welche Poren aufweist, wobei in der Polymermatrix ein Adsorbens eingebettet ist, hervorragende Abtrennungseigenschaften für organische Spurenstoffe aufweist. Gleichzeitig lässt sich eine solche Filtermembran einfach herstellen und sie ist sowohl chemisch als auch mechanisch vergleichsweise stabil. Im Sinne der Erfindung ist unter dem Begriff in die Polymermatrix eingebettet gemeint, dass das Adsorbens vom Polymer teilweise umschlossen ist und nicht nur an der Oberfläche angeordnet ist. Aufgrund des Herstellungsverfahrens mittels Phaseninversion (siehe unten) können große Mengen an Adsorbens in die Polymermatrix eingebracht werden. Die Zusatzstoffe können die Stabilität der Polymermatrix erhöhen. Das Adsorbens konnte bis 70 Gew. % eingebracht werden, wobei die Stabilität ab 60 Gew. % Adsorbens abnimmt. Die besten Ergebnisse konnten erzielt werden, wenn das Verhältnis zwischen Polymer und Adsorber im Bereich 1:0,80 bis 1: 1,20 liegt.

Bevorzugt ist das Polymer ausgewählt aus der Gruppe umfassend Polyethersulfon (PES), Polysulfon (PS), Polypropylen (PP), Polyvinylidenfluorid (PVDF), bevorzugt PES.

Bevorzugt ist das Adsorptionsmittel ausgewählt aus der Gruppe Aktivkohle, Vergaserkohle oder Mischungen daraus. Unter Vergaserkohle wird Kohle aus einem Vergaserprozess, beispielsweise einem Holzvergasungsprozess, verstanden.

Der Porenbildner ist bevorzugt Polyvinylpyrrolidon (PVP). In der fertigen Filtermembran ist das Vorhandensein des Porenbildners zwar nicht Voraussetzung, allerdings wirken sich Reste aus dem Herstellungsprozess grundsätzlich nicht negativ aus über die Laufzeit der Filtermembran betrachtet können solche Reste sogar den Vorteil bieten, dass diese während des Betriebs der Filtermembran herausgelöst und dadurch neue Poren gebildet werden. Durch Membran-Fouling würde die Porenzahl bzw. das Porenvolumen grundsätzlich zurückgehen, allerdings kann die Porenzahl bzw. das Porenvolumen durch Neubildung von Poren einigermaßen konstant gehalten werden.

Die Filtermembran weist bevorzugt eine Permeabilität bezogen auf reines Wasser von 20 bis 1000 L/m² h bar bei 20 °C auf.

Bevorzugt weist die Filtermembran eine Ausschlussgrenze (Molecular-weight-cut-off) von 10 000 Da auf.

Bevorzugt betrifft die Erfindung die Verwendung einer Mehrkanalmembran, umfassend eine Filtermembran der vorgenannten Art. Eine Mehrkanalbahn ist vom Prinzip in der US 2016/0158707 A1 beschrieben. Die Mehrkanalmembran erlaubt eine inside-out oder outside-in Filtration.

Weiter ist eine Filtereinrichtung, umfassend eine Mehrkanalmembran der vorgenannten Art vorgesehen.

Offenbart ist auch Verfahren zur Herstellung einer Filtermembran, wobei zuerst eine Suspension, umfassend (a) eine Lösung eines Polymers in einem Lösungsmittel, eines Porenbildners (b) eines im der Lösung suspendierten Adsorbens und gegebenenfalls (c) Zusatzstoffe bereitgestellt wird, wobei die Filtermembran mittels Phaseninversion aus dem Lösungsmittel abgeschieden wird, sodass eine Polymermatrix gebildet und das Adsorbens in die Polymermatrix eingebettet wird.

Beim Herstellungsverfahren wird zunächst eine Lösung des Polymers und des Porenbildners in einem geeigneten Lösungsmittel bereitgestellt und das Adsorbens in dieser Lösung suspendiert. Anschließend wird mittels eines Phaseninversionsschritts die Filtermembran hergestellt. Hierbei wird der Porenbildner bereits so herausgelöst, dass sich Poren bilden. Teilweise zurückbleibender Porenbildner in der Polymermatrix kann z.B. durch ein Oxidationsmittel entfernt werden. Hierfür kann beispielsweise eine Lösung eines Hypochlorits verwendet werden.

Die Phaseninversion kann auf beliebige, bekannte Art und Weise erfolgen. Eine mögliche Phaseninversion kann z.B. durch Zugabe eines Nichtlösungsmittels wie Wasser erfolgen. Zusätzlich kann die Temperatur verändert werden, um die Löslichkeit zu verringern.

Das Polymer kann ausgewählt sein aus der Gruppe umfassend Polyethersulfon (PES), Polysulfon (PS), Polypropylen (PP), Polyvinylidenfluorid (PVDF), vorzugsweise PES.

Das Adsorptionsmittel kann ausgewählt sein aus der Gruppe Aktivkohle, Vergaserkohle oder Mischungen daraus.

Bevorzugt ist vorgesehen, dass der Porenbildner Polyvinylpyrrolidon (PVP) ist. Als Lösungsmittel ist beispielsweise N,N-Dimethylacetamid (DMAc) geeignet.

Bevorzugt weist die Suspension eine Zusammensetzung bestehend aus
(a) einer Lösung von
   - 10 bis 30 Gew.% des Polymers,
   - 1 bis 10 Gew.% des Porenbildners,
   - 0 bis 5 Gew.% Zusatzstoffe
   - Rest Lösungsmittel,
(b) 1 bis 30 Gew.%, vorzugweise 1 bis 20 Gew.% eines Adsorbens, bezogen auf die Lösung, wobei das Adsorbens in der Lösung suspendiert ist, auf.

Für das Herstellungsverfahren hat sich folgendes Stoffgemisch als geeignet erwiesen:
Stoffgemisch, umfassend (a) eine Lösung von 10 bis 30 Gew.% des Polymers, 1 bis 10 Gew.% des Porenbildners, 0 bis 5 Gew.% Zusatzstoffe Rest Lösungsmittel, (b) 1 bis 30 Gew.%, vorzugweise 1 bis 20 Gew.% eines Adsorbens, bezogen auf die Lösung.

Das Polymer kann ausgewählt sein aus der Gruppe umfassend Polyethersulfon (PES), Polysulfon (PS), Polypropylen (PP), Polyvinylidenfluorid (PVDF), vorzugsweise PES.

Das Adsorptionsmittel kann ausgewählt sein aus der Gruppe Aktivkohle, Vergaserkohle, oder Mischungen daraus. Bevorzugt ist vorgesehen, dass der Porenbildner Polyvinylpyrrolidon (PVP) ist. Als Lösungsmittel ist beispielsweise N,N-Dimethylacetamid (DMAc) geeignet.

### Detaillierte Beschreibung der Erfindung

Nachfolgend wird die Erfindung genauer anhand von Figuren und der dazugehörigen Figurenbeschreibung erläutert.
- Fig. 1 zeigt: eine morphologische Charakterisierung einer Filterflachmembran (im Querschnitt) in Abhängigkeit der Beladung an Adsorbens.
- Fig. 2 zeigt: Permeabilitäten von Flachmembranen in Abhängigkeit der eingebetteten Menge an Adsobermaterial.
- Fig. 3 zeigt: eine Gegenüberstellung der Diclofenac-Rückhalte der eingesetzten Adsorbermaterialien und gleichen Korngrößenverteilung für Flachmembranen.
- Fig. 4 zeigt: Rasterelektronenmikroskopie-Aufnahme einer embedded Mehrkanalmembran aus Polyethersulfon mit 1 Gew.% Pulveraktivkohle.
- Fig. 5 zeigt: Rückhaltsversuche mit 15 mg/L Diclofenac mit Mehrkanalmembranen.

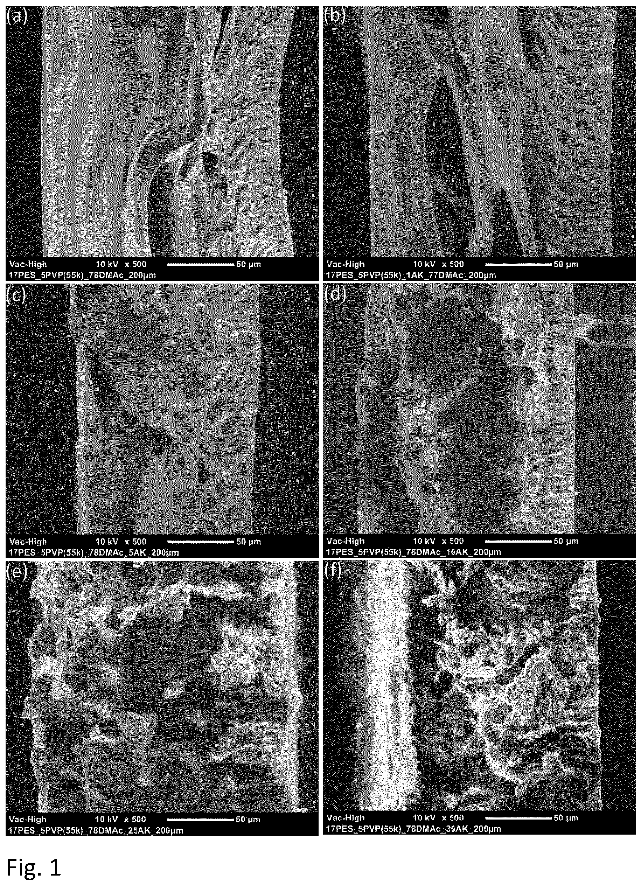

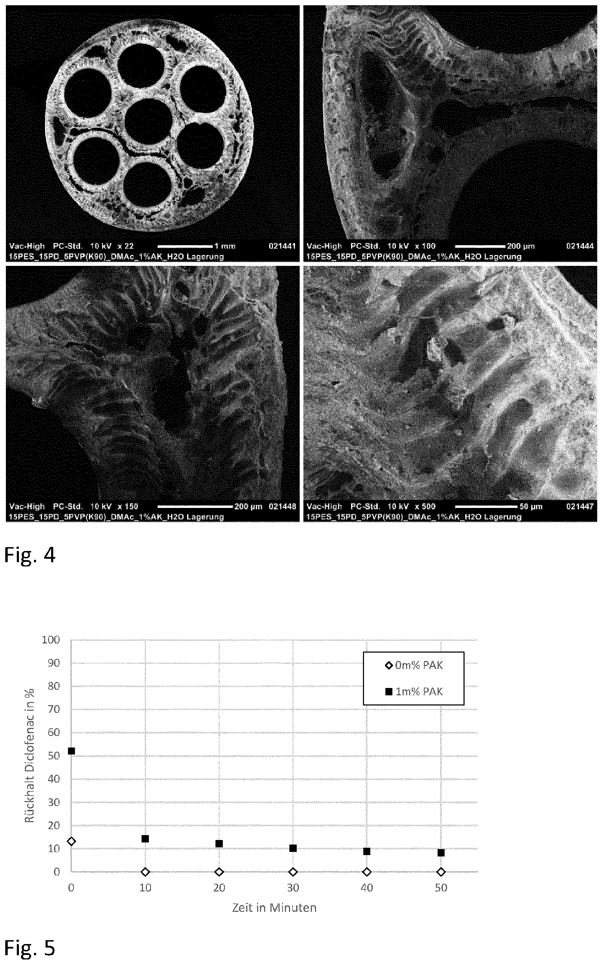

In Abhängigkeit der Herstellungsprozedur für Filterflachmembranen (Fig. 1 bis 3), werden die kritischen Einflussgrößen für die Weiterentwicklung für Nassspinnverfahren für Mehrkanalmembranen (Fig. 4 bis 5) verwendet. Darüber hinaus werden die Membranen rheologisch und morphologisch charakterisiert. Grundsätzlich wären einige Polymere (Polyethersulfone PES, Polysulfone PS, Polypropylen PP, Polyvinylidenfluorid PVDF, etc.) für diese spezifische Anwendung denkbar. In der gegenständlichen Erfindung haben sich die Membranen mit dem Polymer PES als besonders geeignet herausgestellt. PES lässt sich über den Phaseninversionsprozess herstellen und ist verhältnismäßig günstiger und aufwendiger in der Herstellung als beispielweise PVDF. PVDF ist im Gegensatz zu PES chemisch stabiler, allerdings ist PES im definierten Anwendungsbereich chemisch und thermisch ausreichend stabil und weniger anfällig für Membranfouling.

Vor der Untersuchung der embedded-Filtermembran auf deren Wirksamkeit, werden diese mittels Rasterelektronenmikroskop (REM) morphologisch charakterisiert, um Aussagen hinsichtlich poröser Polymerstruktur und Verteilung des Adsorbensmaterial ableiten zu können. Die Zusammensetzung der in Fig. 1 dargestellten Membranen ging von einer Lösung aus 17 Gew. % PES, 5 Gew.% PVP (durchschnittliches Molekulargewicht 55 kDa) und 78 Gew .% DMAc. Das Polymer Polyvinylpyrrolidon (PVP) dient bei der Membranherstellung als Porenbildner. Als Lösungsmittel wurde N,N-Dimethylacetamid (DMAc) verwendet. Die Gießlösungen wurden mit folgenden Mengen an Adsorbens versetzt: (a) 0 Gew.% Adsorbens, (b) 1 Gew.% Adsorbens, (c) 5 Gew.% Adsorbens, (d) 10 Gew.% Adsorbens, (e) 25 Gew.% Adsorbens, (f) 30 Gew.% Adsorbens bezogen auf die Lösung aus 17 Gew. % PES, 5 Gew.% PVP (durchschnittliches Molekulargewicht 55 kDa) und 78 Gew .% DMAc. Die homogene Lösung mit Adsorbens wurde mittels Phaseninversionsverfahren zu Flachmembranen verarbeitet. Dadurch können Rückschlüsse auf die Wirksamkeit des beschriebenen Verfahrens mittels Mehrkanalmembranen gezogen werden. Die REM Untersuchung zeigt eine deutliche Veränderung der Membranstruktur.

Die Bildung der für asymmetrische Membranen charakteristischen Fingerstrukturen wird durch die Zugabe von Adsorbensmaterial zunehmend unterdrückt. Zudem ist erkennbar, dass die Membranporosität mit steigender Beladung abnimmt. Hinsichtlich der mechanischen Stabilität lässt die REM-Analyse für Membranen mit Adsorbensbeladungen von über 25 Gew.% (bezogen auf die Gießlösung) eine Verringerung vermuten. Im Zuge weiterführender Untersuchungen (Zugversuche) wurden die mechanischen Membraneigenschaften analysiert.

Für die erste Performance-Evaluierung werden die hergestellten embedded-Flachmembranen mit dem ausgewählten anthropogenen Spurenstoff Diclofenac als Referenzsubstanz untersucht. In weiterer Folge werden aus den Erkenntnissen der Vorversuche die embedded-Flachmembranen auf deren Wirksamkeit auf Basis der definierten Spurenstoffe ermittelt.

Tabelle 1 zeigt den Rückhalt an Diclofenac in Abhängigkeit der Menge an eingebetteten Adsorbermaterial in die Polymermatrix (Mengenangaben bezogen auf die Gießlösung vor Phaseninversion bezogen auf eine Lösung 17 Gew. % PES, 5 Gew.% PVP (durchschnittliches Molekulargewicht 55 kDa) und 78 Gew .% DMAc). Da durch die Phaseninversion das Lösungsmittel DMAc vollständig und der Porenbildner PVP fast vollständig entfernt wird und im Wesentlichen PES zurückbleibt, ergibt sich ein Massenverhältnis von Aktivkohle zu PES von 1, 5, 10, 15 zu 17.

Die Versuchsreihen wurden bei 20 °C und 25°C und einem pH-Wert von 7,2 mit pulverisierter Aktivkohle (Epidon A - Donau Chemie AG) - AK-EA in der Tabelle - realisiert. Die Leistungs-Evaluierung erfolgt in einer Membrananlage der Firma OSMO -Membrane System GmbH (Memcell Classic) mit einer effektiven Membranfläche von 80 cm². Ferner lässt sich aus den Versuchsreihen eine signifikante Rückhalt-Tendenz als Funktion der Adsobermenge ableiten. Bei Membran EM_EA7 konnte bei einem Fluss von 570 L m⁻² h⁻¹ ein Rückhalt an Diclofenac von ca. 43 % erzielt werden.

**TABELLE 1: FLUSS UND DICLOFENAC-RÜCKHALT DER EMBEDDED-MEMBRANEN IN ABHÄNGIGKEIT DER ADSORBERMENGE (AKTIVKOHLE EPIBON A) BEI EINEM TMP VON 0,5 BAR**

| **EM No.** | **m% AK-EA** | **T [°C]** | **M_{Permeat} [g]** | **Flux [L m⁻² h⁻¹]** | **R(_{Diclofenac}) [%]** |
|---|---|---|---|---|---|
| **EM_EA1** | 1 | 25 | 40,5 | 304 | 1,50 |
| **EM_EA2** | 5 | 25 | 47,1 | 353 | 14,8 |
| **EM_EA3** | 10 | 25 | 49,5 | 371 | 29,7 |
| **EM_EA4** | 10 | 20 | 45,5 | 341 | 17,8 |
| **EM_EA5** | 10 | 20 | 55,5 | 416 | 29,4 |
| **EM_EA6** | 15 | 20 | 86,2 | 647 | 38,0 |
| **EM_EA7** | 15 | 20 | 75,8 | 569 | 42,8 |

Aufgrund der signifikanten Abhängigkeit der eingebetteten Adsorbermenge in Bezug auf Rückhalt an Diclofenac, werden weitere Versuchsreihen zur Ermittlung der Limitierung von Adsorbensmaterial in der Polymermatrix angestrebt. Bei der Herstellung der embedded-Flachmembranen kann es ab 15 Gew. % an Adsorbens (bezogen auf Gießlösung) aufgrund der Korngrößenverteilung vermehrt zur Fehlstellenbildung kommen. Dies resultiert aus der zu großen Korngröße (d₉₀ von ca. 150 µm) in Bezug auf die Membranstärke von ca. 120 µm. Für die Versuchsreihen werden die Adsorbermaterialien (Epibon A - Donau Chemie AG und Vergaserkohle - Demonstrationsanlage MCI) in einer Trockensiebung klassiert und der Siebdurchgang von definierten Intervallen (0-45 µm/ 45-63 µm/ 0-80 µm) in die Polymerlösung eingebettet, um so möglicherweise die Fehlstellen während der Herstellung zu vermeiden und darüber hinaus die Abbaurate in Abhängigkeit der Korngrößenverteilung und die daraus resultierten Permeabilitäten zu evaluieren.

Die Morphologie der embedded-Flachmembranen mit unterschiedlichen Gewichtsanteilen an Aktivkohle unterscheidet sich stark von der Referenzmembran ohne Adsorbermaterial. Ferner erhält man eine ähnliche Morphologie wie in Fig. 1 zu sehen bei Verwendung definierter Intervalle der Korngrößenverteilung.

### PERMEABILITÄTEN

Darüber hinaus umfassen die Experimente Messungen der Permeabilitäten der hergestellten Membranen. Aus diesen Versuchsreihen können Aussagen hinsichtlich Leistung und mechanischer Stabilität abgeleitet werden. Bei allen Messungen wird ein transmembraner Druck von 1 bar verwendet. Während der Experimente haben Flüsse und Permeabilitäten die gleichen numerischen Werte und daher werden nur die Permeabilitäten veranschaulicht.

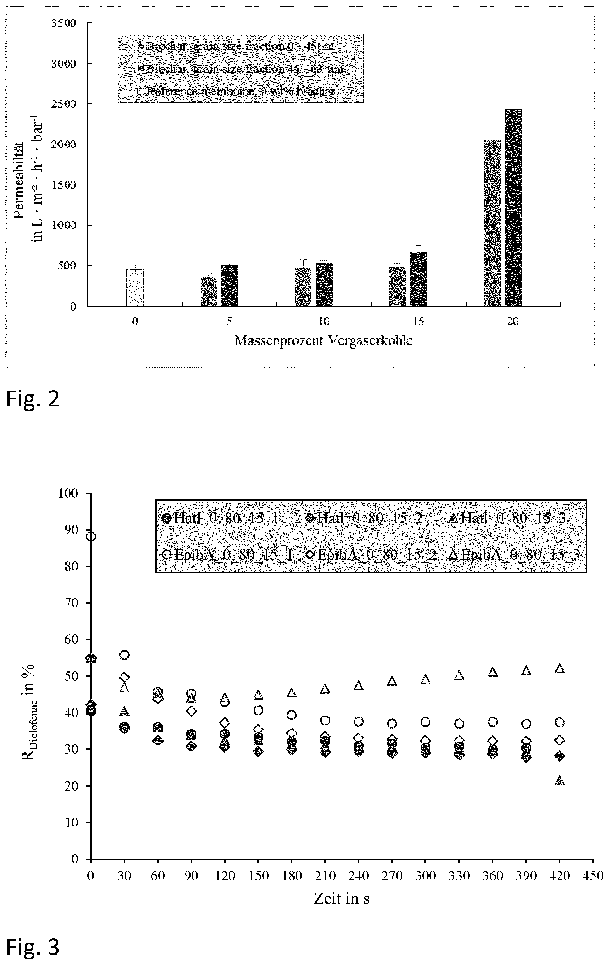

In Fig. 2 sind die Permeabilitäten in Abhängigkeit der Menge an Pulveraktivkohle, welche in die Polymermatrix eingebettet wurden. Obiges Balkendiagramm zeigt (weißer Balken) Referenzmembran und (grauer/schwarzer Balken) unterschiedliche Korngößenverteilungen und Mengenverhältnisse an Adsorbermaterial (Vergaserkohle Demonstrationsanlage Hatlerdorf - VK).

Tabelle 2 zeigt die durchschnittlichen Permeabilitäten in Abhängigkeit der jeweiligen Korngrößenverteilung, Menge und Art des Adsorbermaterials. Daraus kann abgeleitet werden, dass die Menge und Größe des gewählten Korngrößenintervalls grundsätzlich höhere Permeabilitäten liefert. Ferner haben die Versuchsreihen gezeigt das Pulveraktivkohle gegenüber der Vergaserkohle bei gleichen Korngrößenintervall signifikant höhere Permeabilitäten ausweist. Bei den durchgeführten Versuchen hat sich ferner eine Limitierung der eingebetteten Adsorbermaterialien von 20 Massenprozent ergeben. Dies resultiert daraus, dass bei Überschreitung dieser Menge die mechanische Stabilität abnimmt. Darüber hinaus resultieren aus diesen zu hohen Permeabilitäten geringere Abbauraten aufgrund der reduzierten Verweilzeiten.

**TABELLE 2: DURCHSCHNITTLICHE PERMEABILITÄTEN IN ABHÄNGIGKEIT DES MENGE UND ART DER EINGEBETTETEN ADSORBERMATERIALIEN**

| Korngröße / µm | Gew.% Adsorber | Adsorber | Permeabilität / L m⁻² h⁻¹ |
|---|---|---|---|
| Referenzmembran | 0 | - | 447,7±56,3 |
| | | | |
| 0-45 | 5 | VK | 363,9±39,5 |
| 0-45 | 10 | VK | 467,2±117,7 |
| 0-45 | 15 | VK | 474,2±48,3 |
| 0-45 | 20 | VK | 2048,6±746,1 |
| | | | |
| 45-63 | 5 | VK | 500,0±31,8 |
| 45-63 | 10 | VK | 529,8±35,9 |
| 45-63 | 15 | VK | 670,2±79,8 |
| 45-63 | 20 | VK | 2427,3±441,5 |
| | | | |
| 0-80 | 15 | VK | 679,7±37,3 |
| 0-80 | 15 | AK | 738,2±67,1 |

| | | | |
|---|---|---|---|
| VK.... Vergaserkohle | | | |

Die Wirksamkeit dieser embedded-Flachmembranen wurden auf deren Rückhalt von Diclofenac als definierte Leitsubstanz evaluiert. Dabei wurden zum einen die gewälten Adsorbermaterialien in Abhängigkeit der Menge und verwendete Korngrößenverteilung evaluiert. Bezugnehmend auf das geringer BET-Volumen und Porösität weist die Vergaserkohle vergleichbare Rückhalte an Diclofenac.

Eine Möglichkeit das Embedded-System weiterzuentwickeln stellt die Herstellung von Mehrkanalmembranen mit eingebettetem Adsorbermaterial dar. Mehrkanalmembranen zeichnen sich durch eine hohe Packungsdichte aus. Durch das Mehrkanal-Design wird im Vergleich zur klassischen Einkanal-Kapillarmembran die mechanische Stabilität verbessert. Fig. 4 zeigt Rasterelektronenmikroskopie (REM)-Aufnahmen einer Polyethersulfon Mehrkanalmembranen in welche 1 Gew.% Pulveraktivkohle in die Spinnlösung eingebracht wurde. Es ist ersichtlich, dass sich die Aktivkohlepartikel homogen in der Membranmatrix verteilen. Darüber hinaus zeigen die REM, dass die maximale Beladung der Membranstruktur noch nicht erreicht ist und die Möglichkeit zur Erhöhung der eingebetteten Adsorbermaterialmenge gegeben ist. Hinsichtlich mechanischer Stabilität wurde in den Laborversuchen keine signifikante Beeinträchtigung im Vergleich zur Referenzmembran ohne Aktivkohleeinbettung ermittelt.

### RÜCKHALT

**Tabelle 3: Ergebnisse von Reinwasserpermeabilität bei 1 bar, T=25°C und Diclofenac Rückhalt für embedded Mehrkanal-Kapillarmembranen mit 2% Pulveraktivkohle**

| Membran | Zeit in min | Fluss in l/m²h | Rückhalt in % |
|---|---|---|---|
| MCM_2%AK_V1 | 0 | 52,9 | 52,5 |
| MCM_2%AK_V1 | 10 | 65,6 | 36,1 |
| MCM_2%AK_V1 | 20 | 56,4 | 30,0 |
| MCM_2%AK_V1 | 30 | 56,7 | 27,2 |
| MCM_2%AK_V1 | 40 | 56,7 | 23,8 |
| MCM_2%AK_V1 | 50 | 56,2 | 21,6 |
| MCM 2%AK V1 | 60 | 56 | 19,2 |
| MCM_2%AK_V2 | 0 | 63,2 | 53,8 |
| MCM_2%AK_V2 | 10 | 66,8 | 40,3 |
| MCM_2%AK_V2 | 20 | 66,1 | 31,9 |
| MCM_2%AK_V2 | 30 | 67,1 | 26,8 |
| MCM_2%AK_V2 | 40 | 66 | 24,1 |
| MCM_2%AK_V2 | 50 | 65,2 | 21,7 |
| MCM 2%AK V2 | 60 | 65,7 | 19,6 |
| MCM_2%AK_V3 | 0 | 53,3 | 71,6 |
| MCM_2%AK_V3 | 10 | 56,1 | 45,1 |
| MCM_2%AK_V3 | 20 | 56 | 36,1 |
| MCM_2%AK_V3 | 30 | 57,1 | 30,2 |
| MCM_2%AK_V3 | 40 | 56,4 | 26,6 |
| MCM_2%AK_V3 | 50 | 56,4 | 23,7 |
| MCM 2%AK V3 | 60 | 56,4 | 21,6 |

**Tabelle 4: Parameter der Polymerlösung und finalen embedded Membranen**

| **Parameter** | **Charakteristik** |
|---|---|
| MWCO | > 10 000 g/mol |
| Viskosität | 300 - 20 000 mPas bei Scherrate von 200 s⁻¹, *T=* 20 °C |
| Reinwasserpermeabilität | 20 - 1000 L/m² h bar |

Fig. 5 zeigt das Ergebnis der Rückhaltsversuche von einer Mehrkanalmembran mit 1m% Pulveraktivkohle (PAK) sowie der Referenzmembran ohne eingebettetes Adsorbermaterial. Die Masse der Pulveraktivkohle ist dabei auf die Gesamtmasse des Membranspinnversuchs bezogen. Als Feedkonzentration wurden jeweils 15 mg/L Diclofenac verwendet. Es ist ersichtlich, dass sowohl die embedded-Membran als auch die Referenzmembran zu Beginn des Versuchs einen Rückhalt für Diclofenac aufweisen. Der Rückhalt der Polyethersulfon-Referenzmembran von 13,2 % kann durch Wechselwirkungen des Membran- und Hilfspolymers (Polyvinylpyrrolidon) erklärt werden. Die embedded Mehrkanalmembranen zeigt mit 52,2 % einen deutlich erhöhten Diclofenac-Rückhalt. Dieser Unterschied ist durch das zusätzliche Adsorbermaterial erklärbar und zeigt, dass Einbettung von Pulveraktivkohle zur einer Spurenstoffabtrennung führt. Im weiteren Versuchsverlauf sinkt der Diclofenac-Rückhalt bei der Referenzmembran ohne PAK auf 0 % ab. Die Ergebnisse zeigen, dass die Beladungskapazität für das Material der reinen Polymermembran innerhalb von wenigen Minuten erreicht wird. Im Gegensatz dazu zeigt die embedded Mehrkanalmembranen über den gesamten Versuchszeitraum eine Diclofenac-Abtrennung. Die Ergebnisse zeigen, dass Mehrkanalmembranen mit eingebetteter Pulveraktivkohle in der Lage sind Spurenstoffe aus wässrigen Lösungen abzutrennen. Hinsichtlich einer Optimierung der Membran in Bezug auf eine Steigerung des erzielbaren Rückhalts sind weitere Versuche erforderlich. Dabei sollen unter anderem der Aktivkohleanteil erhöht und die Polymerzusammensetzung untersucht werden.

## Patentansprüche

1. Verfahren zur Abtrennung von Spurenstoffen aus verunreinigtem Wasser, wobei mit Spurenstoffen verunreinigtes Wasser zuerst vorgereinigt wird und anschließend mit einer Filtermembran filtriert wird, wobei die Filtermembran eine Mehrkanalmembran mit einer Polymermatrix, Poren und
• 3 bis 70 Gew. % Adsorbens, vorzugsweise 40 bis 60 Gew. % Adsorbens,
• 0 bis 5 Gew. % Zusatzstoffe,
• 0 bis 5 Gew.% Porenbildner,
• Rest Polymer,
aufweist, wobei das Adsorbens und gegebenenfalls die Zusatzstoffe und gegebenenfalls der Porenbildner in die Polymermatrix eingebettet sind, wobei die Filtermembran einen Zulauf für das grob filtrierte Wasser aufweist und das Abwasser dann die Filtermembran permeiert, wobei die im grob filtrierten Wasser enthaltenen Spurenstoffe am Adsorbens zumindest teilweise adsorbiert werden.

2. Verfahren nach Anspruch 1, **dadurch gekennzeichnet, dass** die Spurenstoffe aus der Gruppe umfassend organische Spurenstoffe wie Sulfamethoxazol, Carbamazepin, Diuron, Bisphenol A, Benzafibrat, Diclofenac, Ibuprofen, Metoprolol, Benzotriazol und Iohexol ausgewählt sind.

3. Verfahren nach Anspruch 1 oder Anspruch 2, **dadurch gekennzeichnet, dass** die Spurenstoffe aus der Gruppe umfassend Blei, Cadmium, Arsen, Antimon, Eisen, Quecksilber, Nitrat, Nitrit, Sulfat, Ammonium, Phosphat ausgewählt sind.

4. Verfahren nach einem der Ansprüche 1 bis 3, **dadurch gekennzeichnet, dass** das verunreinigte Wasser Abwasser, aufzureinigendes Trinkwasser oder aufzureinigendes Prozesswasser ist.

5. Filtrationsanlage für verunreinigtes Wasser, umfassend einen Vorreinigungszulauf für verunreinigtes Wasser, eine mit dem Vorreinigungszulauf fluidleitend verbundene Vorreinigungsanlage mit einem Vorreinigungsauslass und eine mit dem Vorreinigungsauslass fluidleitend verbundene Filtermembran, wobei die Filtermembran eine Mehrkanalmembran mit einer Polymermatrix, Poren und
• 3 bis 70 Gew. % Adsorbens, vorzugsweise 40 bis 60 Gew. % Adsorbens,
• 0 bis 5 Gew. % Zusatzstoffe,
• 0 bis 5 Gew.% Porenbildner,
• Rest Polymer,
aufweist, wobei das Adsorbens und gegebenenfalls die Zusatzstoffe und gegebenenfalls der Porenbildner in die Polymermatrix eingebettet sind.

6. Filtrationsanlage nach Anspruch 5, **dadurch gekennzeichnet, dass** das Adsorptionsmittel ausgewählt ist aus der Gruppe Aktivkohle, Vergaserkohle oder Mischungen daraus.

7. Filtrationsanlage nach Anspruch 5 oder Anspruch 6, **dadurch gekennzeichnet** das Adsorptionsmittel einen Partikelgröße von 0,1 bis 100 µm aufweist.

8. Filtrationsanlage nach einem der Ansprüche 5 bis 7, **dadurch gekennzeichnet, dass** die Filtermembran eine Permeabilität bezogen auf reines Wasser von 1 bis 1000 L/m² h bar, vorzugsweise 20 bis 1000 L/m² h bar, aufweist.

9. Filtrationsanlage nach einem der Ansprüche 5 bis 8, dass die Filtermembran eine Ausschlussgrenze (Molecular-weight-cut-off) von 10 000 Da bis 1 000 000 Da aufweist.

10. Filtrationsanlage nach einem der Ansprüche 5 bis 9, **dadurch gekennzeichnet, dass** das Polymer ausgewählt ist aus der Gruppe umfassend Polyethersulfon (PES), Polysulfon (PS), Polypropylen (PP), Polyvinylidenfluorid (PVDF), vorzugsweise PES.

11. Filtrationsanlage nach einem der Ansprüche 5 bis 10, **dadurch gekennzeichnet, dass** der Porenbildner Polyvinylpyrrolidon (PVP) ist.

12. Filtrationsanlage nach einem der Ansprüche 5 bis 11, **dadurch gekennzeichnet, dass** die Vorreinigungsanlage eine mechanische Vorreinigungsstufe und/oder eine biologische Vorreinigungsstufe umfasst.

13. Filtrationsanlage nach einem der Ansprüche 5 bis 12, **dadurch gekennzeichnet, dass** die Vorreinigungsanlage eine mechanische Vorreinigungsstufe aufweist, welche ausgewählt ist aus der Gruppe Rechen, Sieb, Koagulation- und Sedimentationsanlage.

14. Filtrationsanlage nach einem der Ansprüche 5 bis 13, **dadurch gekennzeichnet, dass** die Vorreinigungsanlage eine biologische Vorreinigungsstufe aufweist, welche ausgewählt ist aus der Gruppe Belebtschlammbecken, Vor- und Nachklärunganlage und Membranbioreaktor.

15. Abwasserreinigungsanlage, umfassend eine Filtrationsanlage nach einem der Ansprüche 5 bis 14.

## Claims

1. Process for separating trace substances from contaminated water, wherein water contaminated with trace substances is first pre-cleaned and then filtered with a filter membrane, wherein the filter membrane comprises a multi-channel membrane with a polymer matrix, pores and
• 3 to 70 % by weight adsorbent, preferably 40 to 60 % by weight adsorbent,
• 0 to 5 % by weight of additives,
• 0 to 5 % by weight of pore-forming agent,
• Rest Polymer,
wherein the adsorbent and optionally the additives and optionally the pore-forming agent are embedded in the polymer matrix, wherein the filter membrane has an inlet for the coarsely filtered water and the contaminated water then permeates the filter membrane, wherein the trace substances contained in the coarsely filtered water are at least partially adsorbed on the adsorbent.

2. Process according to claim 1, **characterized in that** the trace substances are selected from the group comprising organic trace substances such as sulfamethoxazole, carbamazepine, diuron, bisphenol A, benzafibrate, diclofenac, ibuprofen, metoprolol, benzotriazole and iohexol.

3. Process according to claim 1 or claim 2, **characterized in that** the trace substances are selected from the group comprising lead, cadmium, arsenic, antimony, iron, mercury, nitrate, nitrite, sulphate, ammonium, phosphate.

4. Process according to one of claims 1 to 3, **characterized in that** the contaminated water is waste water, drinking water to be purified or process water to be purified.

5. Filtration system for contaminated water, comprising a pre-cleaning inlet for contaminated water, a pre-cleaning unit with a pre-cleaning outlet fluidly connected to the pre-cleaning inlet and a filter membrane fluidly connected to the pre-cleaning outlet, wherein the filter membrane is a multi-channel membrane with a polymer matrix, pores and
• 3 to 70 % by weight adsorbent, preferably 40 to 60 % by weight adsorbent,
• 0 to 5 % by weight of additives,
• 0 to 5 % by weight of pore-forming agent,
• Rest Polymer,
wherein the adsorbent and optionally the additives and optionally the pore-forming agent are embedded in the polymer matrix.

6. Filtration system according to claim 5, **characterized in that** the adsorbent is selected from the group consisting of activated carbon, gasifier carbon or mixtures thereof.

7. Filtration system according to claim 5 or claim 6, **characterized in that** the adsorbent has a particle size of 0.1 to 100 µm.

8. Filtration system according to one of claims 5 to 7, **characterized in that** the filter membrane has a permeability relative to pure water of 1 to 1000 L/m² h bar, preferably 20 to 1000 L/m² h bar.

9. Filtration system according to any one of claims 5 to 8, in that the filter membrane has a cut-off limit (molecular weight cut-off) of 10 000 Da to 1 000 000 Da.

10. Filtration system according to any one of claims 5 to 9, **characterized in that** the polymer is selected from the group comprising polyethersulfone (PES), polysulfone (PS), polypropylene (PP), polyvinylidene fluoride (PVDF), preferably PES.

11. Filtration system according to one of claims 5 to 10, **characterized in that** the pore-forming agent is polyvinylpyrrolidone (PVP).

12. Filtration plant according to one of claims 5 to 11, **characterized in that** the pre-purification plant comprises a mechanical pre-purification stage and/or a biological pre-purification stage.

13. Filtration plant according to one of claims 5 to 12, **characterized in that** the pre-purification plant has a mechanical pre-purification stage which is selected from the group of screens, sieves, coagulation and sedimentation plants.

14. Filtration plant according to one of claims 5 to 13, **characterized in that** the pre-treatment plant has a biological pre-treatment stage which is selected from the group activated sludge tank, primary and secondary clarification plant and membrane bioreactor.

15. Waste water purification plant comprising a filtration plant according to any one of claims 5 to 14.

## Revendications

1. Procédé permettant la séparation de substances à l'état de trace d'une eau contaminée, dans lequel l'eau contaminée par des substances à l'état de trace est d'abord prépurifiée, puis filtrée à l'aide d'une membrane filtrante, dans lequel la membrane filtrante présente une membrane à canaux multiples comportant une matrice polymérique, des pores et
• 3 à 70 % en poids d'adsorbant, de préférence 40 à 60 % en poids d'adsorbant,
• 0 à 5 % en poids d'additifs,
• 0 à 5 % en poids d'agent porogène,
• des résidus de polymères,
dans lequel l'adsorbant et éventuellement les additifs et éventuellement l'agent porogène sont incorporés dans la matrice polymérique, dans lequel la membrane filtrante présente une arrivée pour l'eau filtrée grossièrement et l'eau usée traverse alors la membrane filtrante, dans lequel les substances à l'état de trace contenues dans l'eau filtrée grossièrement sont adsorbées au moins partiellement sur l'adsorbant.

2. Procédé selon la revendication 1, **caractérisé en ce que** les substances à l'état de trace sont choisies dans le groupe comprenant des substances à l'état de trace organiques telles que sulfaméthoxazole, carbamazépine, diuron,
bisphénol A, bézafibrate, diclofénac, ibuprofène, métoprolol, benzotriazole et iohexol.

3. Procédé selon la revendication 1 ou la revendication 2,
**caractérisé en ce que** les substances à l'état de trace sont choisies dans le groupe comprenant plomb, cadmium, arsenic, antimoine, fer, mercure, nitrate, nitrite, sulfate, ammonium, phosphate.

4. Procédé selon l'une des revendications 1 à 3, **caractérisé en ce que** l'eau contaminée est une eau usée, une eau potable à purifier ou une eau de traitement à purifier.

5. Installation de filtration pour une eau contaminée, comprenant une arrivée de prépurification pour l'eau contaminée, une installation de prépurification reliée d'une manière conductrice de fluide à l'arrivée de prépurification et comportant une sortie de prépurification, et une membrane filtrante reliée d'une manière conductrice de fluide à la sortie de prépurification, dans laquelle la membrane filtrante présente une membrane à canaux multiples comportant une matrice polymérique, des pores et
• 3 à 70 % en poids d'adsorbant, de préférence 40 à 60 % en poids d'adsorbant,
• 0 à 5 % en poids d'additifs,
• 0 à 5 % en poids d'agent porogène,
• des résidus de polymères,
dans laquelle l'adsorbant et éventuellement les additifs et éventuellement l'agent porogène sont incorporés dans la matrice polymérique.

6. Installation de filtration selon la revendication 5, **caractérisée en ce que** l'agent d'adsorption est choisi dans le groupe constitué de charbon actif, charbon gazéifié ou de mélanges de ceux-ci.

7. Installation de filtration selon la revendication 5 ou la revendication 6, **caractérisée en ce que** l'agent d'adsorption présente une taille de particules allant de 0,1 à 100 µm.

8. Installation de filtration selon l'une des revendications 5 à 7, **caractérisée en ce que** la membrane filtrante présente une perméabilité allant de 1 à 1 000 l/m²·h·bar, de préférence de 20 à 1 000 l/m²·h·bar, par rapport à une eau pure.

9. Installation de filtration selon l'une des revendications 5 à 8, **caractérisée en ce que** la membrane filtrante présente un seuil de coupure (Molecular-weight-cut-off) allant de 10 000 Da à 1 000 000 Da.

10. Installation de filtration selon l'une des revendications 5 à 9, **caractérisée en ce que** le polymère est choisi dans le groupe comprenant polyéthersulfone (PES), polysulfone (PS), polypropylène (PP), polyfluorure de vinylidène (PVDF), de préférence est du PES.

11. Installation de filtration selon l'une des revendications 5 à 10, **caractérisée en ce que** l'agent porogène est la polyvinylpyrrolidone (PVP).

12. Installation de filtration selon l'une des revendications 5 à 11, **caractérisée en ce que** l'installation de prépurification comprend un étage de prépurification mécanique et/ou un étage de prépurification biologique.

13. Installation de filtration selon l'une des revendications 5 à 12, **caractérisée en ce que** l'installation de prépurification présente un étage de prépurification mécanique qui est choisi dans le groupe constitué de dégrilleur, tamis, installation de coagulation et installation de sédimentation.

14. Installation de filtration selon l'une des revendications 5 à 13, **caractérisée en ce que** l'installation de prépurification présente un étage de prépurification biologique qui est choisi dans le groupe constitué de bassin à boues activées, installation de décantation primaire et de décantation secondaire et bioréacteur à membrane.

15. Installation de purification d'eaux usées, comprenant une installation de filtration selon l'une des revendications 5 à 14.
